# EUROPEAN PATENT APPLICATION

(11) **EP 4 318 723 A1**
(43) Date of publication of application: **07.02.2024**
(21) Application number: 22887709.8
(22) Date of filing: 28.10.2022
(51) Int. Cl.: H01M 10/0585, H01M 10/04, H01M 50/46, H01M 50/446, H01M 50/449

(54) **ELECTRODE ASSEMBLY AND SECONDARY BATTERY INCLUDING SAME**

(30) Priority: 28.10.2021 KR 20210145991
(71) Applicant: LG ENERGY SOLUTION, LTD., Seoul 07335 (KR)
(72) Inventor: BAE, Dong Hun, Daejeon 34122 (KR); KIM, Ji Eun, Daejeon 34122 (KR); SHIN, Hwan Ho, Daejeon 34122 (KR)
(74) Representative: Plasseraud IP
(86) International application number: PCT/KR2022/016730
(87) International publication number: WO 2023/075514

(57) **Abstract**

The present invention provides an electrode assembly in which positive electrodes and negative electrodes are alternately stacked with separators interposed therebetween and which includes two or more types of separators having different temperatures at which adhesion is maximized, wherein the temperature at which the adhesion of the separators, positioned in the central portion of the electrode assembly, to the electrodes is maximized is lower than the temperature at which the adhesion of the separators, positioned in the other regions, to the electrodes is maximized, and also a secondary battery including the electrode assembly.

## Description

### TECHNICAL FIELD

### Cross-reference to Related Applications

This application claims the benefit of Korean Patent Application No. 10-2021-0145991, filed on October 28, 2021, the disclosure of which is incorporated herein in its entirety by reference.

### Technical Field

The present invention relates to an electrode assembly including a plurality of separators, and a secondary battery including the same.

### BACKGROUND ART

In general, a secondary battery is formed in a structure in which an electrode assembly and an electrolyte are sealed inside a battery case, and is mainly classified into a cylindrical battery, a prismatic battery, a pouch-type battery, etc., according to the appearance thereof, and is also classified into a lithium ion battery, a lithium ion polymer battery, a lithium polymer battery, etc., according to the type of electrolyte. Due to the recent trend of miniaturization of mobile devices, demand for a prismatic battery and a pouch-type battery having a small thickness has been increasing, and in particular, an interest in a pouch-type battery that is easily deformed and has a small weight has been increasing.

Meanwhile, the electrode assembly accommodated in the battery case may be classified into a jelly-roll type (wound type), a stacked type, a stack and folding type (complex type), or a stack and lamination type according to a shape thereof.

In general, a secondary battery is manufactured through an activation process after being assembled in a manner that an electrode assembly is embedded in a battery case together with an electrolyte. The activation process stabilizes a battery structure and makes the battery usable through the process of charging, aging, and discharging the assembled battery. During the activation process, the negative electrode is expanded when the battery is charged, and a defect portion in which the electrodes and the separator are not well adhered to each other is getting wider, and thus the electrode assembly may be bent in one direction or randomly. There is a limitation in that this bending phenomenon appears more prominently in the stacked-type electrode assembly and the stack and lamination-type electrode assembly.

### DISCLOSURE OF THE INVENTION

### TECHNICAL PROBLEM

An aspect of the present invention provides an electrode assembly and a secondary battery including the same, the electrode assembly being developed by disposing separators having different adhesive properties in the central portion and surface portion of the electrode assembly in order to prevent a bending phenomenon from occurring.

### TECHNICAL SOLUTION

According to an aspect of the present invention, there are provided an electrode assembly in which positive electrodes and negative electrodes are alternately stacked with separators interposed therebetween and which includes two or more types of separators having different temperatures at which adhesion is maximized, wherein the temperature at which the adhesion of the separators, positioned in the central portion of the electrode assembly, to the electrodes is maximized is lower than the temperature at which the adhesion of the separators, positioned in the other regions, to the electrodes is maximized, and also a secondary battery including the electrode assembly.

### ADVANTAGEOUS EFFECTS

According to the present invention, the separators having different adhesive properties are disposed in a central portion and surface portion (outer part) of the electrode assembly, and thus the bending phenomenon of the electrode assembly caused by temperature non-uniformity inside the electrode assembly during the activation process can be suppressed.

In the activation process, in order to increase adhesion between the electrodes and the separators before or during the initial charging, a hot press process, that is, a pressurized pre-heating process, in which a certain pressure and heat are applied to the secondary battery, may be performed. In this case, when the same separator is used throughout the electrode assembly, a temperature difference between the surface portion and the central portion occurs due to the thickness of the electrode assembly.

If the pressurized heating conditions are set according to the surface portion of the electrode assembly, the separators positioned in the central region does not reach a temperature at which the adhesion is sufficient, and thus the adhesion of the separators positioned in the surface portion to the electrodes becomes higher than that of the central region. The separators positioned on the surface portion are stretched with higher adhesion when the attached electrodes are expanded by the initial charging, and the electrode assembly is bent due to the difference in the degree of expansion or stretch of the separators positioned in the central portion and the surface portion.

On the contrary, if the pressurized heating conditions are set according to the central portion of the electrode assembly, the separators positioned in the surface region are placed at a temperature at which the adhesion is low, and thus the adhesion of the separators positioned in the surface region to the electrodes is weakened compared to the central portion. Due to the difference in adhesion, a difference in the degree of expansion or stretch of the separators occurs in the central portion and the surface portion, resulting in a bending phenomenon in which the electrode assembly is bent. However, if the separator having the maximum adhesion at a relatively low temperature is disposed in the central portion of the electrode assembly and the separator having the maximum adhesion at a relatively high temperature is disposed in the surface portion of the electrode assembly as in the present invention, the difference in adhesion due to the temperature difference between the central portion and the surface portion of the electrode assembly during the activation process may be reduced, thereby suppressing the bending phenomenon.

In addition, the secondary battery including the electrode assembly having a less bending phenomenon has an effect of increasing the durability, the stability, or the like.

### BRIEF DESCRIPTION OF THE DRAWINGS

FIG. 1 is a schematic view of an electrode assembly manufactured in Example 1.
FIG. 2 shows a result of bending evaluation of a secondary battery manufactured in Example 1.
FIG. 3 shows a result of bending evaluation of a secondary battery manufactured in Comparative Example 1.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

Hereinafter, the present invention will be described in more detail.

The present applicant has found that a temperature difference occurs in a surface portion and a central portion of an electrode assembly due to the thickness of a secondary battery during an activation process, particularly, a pressurized pre-heating process, and thus the electrode assembly is bent. Specifically, the present applicant has found that a bending phenomenon occurs due to a difference in adhesion between the separators positioned in the surface portion of the electrode assembly and the separators positioned in the central portion due to a temperature deviation caused by a difference in heat transfer inside the electrode assembly during the pressured pre-heating process, and thus, the present invention provides an electrode assembly capable of preventing such a bending shape, and a secondary battery including the electrode assembly.

### Electrode assembly

In the electrode assembly according to the present invention, positive electrodes and negative electrodes are alternately stacked with separators interposed therebetween, and the total number of the positive electrodes, the negative electrodes, and the separators may be at least 20 to 50, preferably 20 to 45, and more preferably 30 to 45. When the total number of the positive electrodes, the negative electrodes, and the separators included in the electrode assembly is less than the above range, there is a disadvantage that achieving high capacity is difficult, and when the total number is more than the above range, there are disadvantages that the process is complicated and it is difficult to suppress the bending phenomenon.

In this case, the materials and types of the positive electrode, the negative electrode, and the separator are not particularly limited, and various positive electrodes, negative electrode, and separators known in the art may be used.

Meanwhile, the electrode assembly of the present invention is characterized in that a separator having different adhesive properties, particularly, having different temperatures, at which the maximum adhesion is achieved, is disposed in the central portion and the surface portion of the electrode assembly.

Specifically, the electrode assembly of the present invention is an electrode assembly in which positive electrodes and negative electrodes are alternately stacked with separators interposed therebetween and which includes two or more types of separators having different temperatures at which adhesion is maximized, wherein the temperature at which the adhesion of the separators, positioned in the central portion of the electrode assembly, to the electrodes is maximized may be lower than the temperature at which the adhesion of the separators, positioned in the other regions, to the electrodes is maximized.

In this case, the central portion of the electrode assembly may mean a region in which the distance from the outermost surface is D/2 - kD to D/2 + kD, and the other regions than the region may mean the surface portion of the electrode assembly, k above may be a constant satisfying the range of 0.1≤k≤0.3, preferably satisfying the range of 0.1≤k≤0.25, and most preferably satisfying the range of 0.1≤k≤0.2. When k satisfies the above range, the difference in adhesion between the separator positioned in the surface portion and the separator positioned in the central portion is reduced during the activation process, and thus there is an effect of suppressing the bending phenomenon.

Specifically, in the electrode assembly of the present invention, the difference between the temperature at which the adhesion of the separators, positioned in the central portion, to the electrodes is maximized and the temperature at which the adhesion of the separators, positioned in the other regions (surface portion), to the electrodes is maximized may be 1 °C to 15 °C, preferably, 1 °C to 10 °C, and more preferably, 3 °C to 8 °C. The central portion of the electrode assembly exhibits a lower temperature than the surface portion because the central portion has the amount of heat transferred in the pressurized pre-heating process smaller than the surface portion. In the activation process, the temperature difference between the central portion and the surface region varies with the thickness or material of the electrode assembly, but is generally 1 °C to 15 °C. Accordingly, if the difference between the maximum adhesion reaching temperatures of the separators in the central portion and the separators in the surface region is controlled to the above level, the adhesion deviation between the separators in the central portion and the separators in the surface region becomes small, and thus the occurrence of bending due to the adhesion deviation can be suppressed.

More specifically, the temperature at which the adhesion of the separators positioned in the central portion is maximized may be less than 70 °C, preferably, 50 °C to 70 °C (exclusive of 70), and more preferably, 55 °C to 68 °C. In addition, the temperature at which the adhesion of the separators positioned in the surface region is maximized may be 70 °C to 80 °C, preferably, 70 °C to 75 °C, and more preferably, 70 °C to 72 °C.

Meanwhile, in the electrode assembly of the present invention, a ratio of the number of separators positioned in the region in which the distance from the outermost surface of the electrode assembly is D/2 - kD to D/2 + kD to the number of separators included in the entire electrode assembly may be 1:1 to 1:4, preferably 1:1 to 1:3, more preferably 1:1.25 to 1:1.50. When the ratio of the number of separators positioned in the region in which the distance from the outermost surface of the electrode assembly is D/2 - kD to D/2 + kD to the number of separators included in the entire electrode assembly satisfies the above range, a sufficient number of positive and negative electrodes may be stacked, and thus there are advantages that the energy density of the cell may be secured as well as the increase in the thickness of the cell due to temperature deviation may be minimized.

Hereinafter, each component in the electrode assembly will be described in detail.

### Separator

A separator in the electrode assembly serves to block an internal short circuit between the electrodes and impregnate an electrolyte.

In the present invention, the temperature at which the adhesion of the separator is maximized may be measured by using a universal testing machine (UTM), and specifically, the temperature may be calculated by: (1) sampling a positive electrode and a separator to be a size of 2cm X 6cm, respectively; (2) stacking the sampled positive electrode and separator; (3) putting the stacked sample into a pouch sealed on three sides thereof and then injecting an electrolyte solution thereto; (4) completely sealing the pouch and carrying out pressing and heating for 5 minutes through jig formation; and (5) connecting, to UTM tongs, the separator portion in the stack of the positive electrode and the separator after opening the pouch, and then measuring the adhesion at an angle of 90° by means of a peel-off test.

A typically used porous polymer resin, for example, a porous polymer resin prepared from a polyolefin-based polymer, such as an ethylene homopolymer, a propylene homopolymer, an ethylene/butene copolymer, an ethylene/hexene copolymer, and an ethylene/methacrylate copolymer, may be used alone or in a mixture thereof as the separator according to the present invention, or a typical porous nonwoven fabric, for example, a nonwoven fabric formed of high melting point glass fibers or polyethylene terephthalate fibers may be used, but the present invention is not limited thereto.

In this case, the porous separator may generally have a pore diameter of 0.01 um to 50 um and a porosity of 5% to 95%.

The separators included in the electrode assembly of the present invention may include a coating layer or binder coating layer including inorganic particles or polymer materials.

Specifically, a safety reinforced separator (SRS) on which a coating layer including inorganic particles formed from ceramic components or a polymer material is formed may be used as separators included in the electrode assembly of the present invention in order to secure heat resistance or mechanical strength.

Specifically, the separators included in the electrode assembly of the present invention may include a porous separator substrate, and a porous coating layer entirely coated on one surface or both surfaces of the separator substrate, and the coating layer may include a mixture of inorganic particles selected from a metal oxide, a metalloid oxide, a metal fluoride, a metal hydroxide, and a combination thereof, and a binder polymer for connecting and fixing the inorganic particles to each other.

The coating layer may include, as inorganic particles, at least one selected from among Al₂O₃ and AlOOH. Here, the inorganic particles may improve thermal stability of the separator. That is, the inorganic particles may prevent the separator from being contracted at high temperatures. In addition, the binder polymer may improve mechanical stability of the separator by fixing the inorganic particles.

In addition, the coating layer may include, as a binder polymer, at least one selected from among polyethylene, polyvinylidene fluoride, polyvinylidene fluoride-tetrafluoroethylene, polyvinylidene fluoride-chlorotrifluoroethylene, and polyvinylidene fluoride-hexafluoropropylene. The binder polymer may bond the electrode to the separator. Because the binder polymer is distributed throughout the coating layer, the electrode may closely adhere to the entire adhesion surface by the binder polymer, unlike the above described binder. Therefore, when such a separator is used, the electrode may be more stably fixed to the separator.

In the present invention, the temperature at which the adhesion of the separators is maximized may be adjusted by means of a method, such as changing the type of binder included in the coating layer or adjusting the humidification conditions during coating, but the present invention is not limited thereto.

The thickness of the separator according to the present invention may generally range from 7 µm to 22 µm, preferably, 9 µm to 15 µm. When the thickness of the separator is in the above range, the number of stacks of the positive electrode, the separator, and the negative electrode may be increased, thereby increasing the energy density.

### Positive Electrode

The positive electrode included in the electrode assembly of the present invention may be prepared by coating a positive electrode collector with a positive electrode material mixture slurry including a positive electrode active material, a binder, a conductive agent, a solvent, etc.

The positive electrode collector is not particularly limited so long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used.

The positive electrode active material is a compound capable of reversibly intercalating and deintercalating lithium, wherein the positive electrode active material may specifically include a lithium composite metal oxide including lithium and at least one metal such as cobalt, manganese, nickel, or aluminum. More specifically, the lithium metal oxide may include a lithium-manganese-based oxide (e.g., LiMnO₂, LiMn₂O₄, etc.), a lithium-cobalt-based oxide (e.g., LiCoO₂, etc.), a lithium-nickel-based oxide (e.g., LiNiO₂, etc.), a lithium-nickel-manganese-based oxide (e.g., LiNi_{1-Y}Mn_{Y}O₂ (where 0<Y<1), LiMn_{2-z}Ni_{z}O₄ (where 0<Z<2), etc.), a lithium-nickel-cobalt-based oxide (e.g., LiNi_{1-Y1}Co_{Y1}O₂ (where 0<Y1<1), etc.), a lithium-manganese-cobalt-based oxide (e.g., LiCo_{1-Y2}Mn_{Y2}O₂ (where 0<Y2<1), LiMn_{2-z1}Co_{z1}O₄ (where 0<Z1<2), etc.), a lithium-nickel-manganese-cobalt-based oxide (e.g., Li(NiₚCo_{q}Mn ᵣ)O₂ (where 0<p<1, 0<q<1, 0< r<1, and p+q+r=1) or Li(Niₚ₁Co_{q1}Mnᵣ₁)O₄ (where 0<p1<2, 0<q1<2, 0<r1<2, and p1+q1+r1=2), etc.), or a lithium-nickel-cobalt-transition metal (M) oxide (e.g., Li(Niₚ₂Co_{q2}Mnᵣ₂Mₛ₂)O₂ (where M is selected from the group consisting of Al, Fe, V, Cr, Ti, Ta, Mg, and Mo, and p2, q2, r2, and s2 are atomic fractions of each independent elements, wherein 0<p2<1, 0<q2<1, 0<r2<1, 0<S2<1, and p2+q2+r2+S2=1), etc.), and any one thereof or a mixture of two or more thereof may be included.

Among these materials, in terms of the improvement of capacity characteristics and stability of the battery, the lithium composite metal oxide may include LiCoO₂, LiMnO₂, LiNiO₂, lithium nickel manganese cobalt oxide (e.g., Li(Ni_{1/3}Mn_{1/3}Co_{1/3})O₂, Li (Ni_{0.6}Mn_{0.2}Co_{0.2})O₂, Li (Ni_{0.5}Mn_{0.3}Co_{0.2})O₂, Li(Ni_{0.7}Mn_{0.15}Co_{0.15})O₂, and Li(Ni_{0.8}Mn_{0.1}Co_{0.1})O₂), or lithium nickel cobalt aluminum oxide (e.g., Li (Ni_{0.8}Co_{0.15}Al_{0.05})O₂, etc.), and, in consideration of a significant improvement due to the control of type and content ratio of elements constituting the lithium composite metal oxide, the lithium composite metal oxide may include Li (Ni_{0.6}Mn_{0.2}Co_{0.2})O₂, Li (Ni_{0.5}Mn_{0.3}Co_{0.2})O₂, Li(Ni_{0.7}Mn_{0.15}Co_{0.15})O₂, or Li(Ni_{0.8}Mn_{0.1}Co_{0.1})O₂, and any one thereof or a mixture of two or more thereof may be used.

The positive electrode active material may be included in an amount of 60 wt% to 99 wt%, preferably 70 wt% to 99 wt%, and more preferably 80 wt% to 98 wt% based on the total weight of the solid content in the positive electrode material mixture slurry.

The binder is a component that assists in the binding between the active material and the conductive agent and in the binding with the current collector.

Examples of the binder may include polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene (PE), polypropylene, ethylene-propylene-diene, sulfonated ethylene-propylene-diene, a styrene-butadiene rubber, a fluoro rubber, various copolymers, and the like.

The binder may be generally included in an amount of 1 wt% to 20 wt%, preferably 1 wt% to 15 wt%, and more preferably 1 wt% to 10 wt% based on the total weight of the solid content in the positive electrode material mixture slurry.

The conductive agent is a component for further improving the conductivity of the positive electrode active material.

The conductive agent is a component for further improving the conductivity of the negative electrode active material, wherein the conductive agent may be added in an amount of 1 wt% to 20 wt% based on the total weight of the solid content in the negative electrode slurry. The conductive agent is not particularly limited as long as it has conductivity without causing adverse chemical changes in the battery, and, for example, a conductive material, such as: carbon powder such as carbon black, acetylene black, Ketjen black, channel black, furnace black, lamp black, or thermal black; graphite powder such as natural graphite, artificial graphite, or graphite; conductive fibers such as carbon fibers, carbon nanotubes, or metal fibers; fluorocarbon powder; conductive powder such as aluminum powder or nickel powder; conductive whiskers such as zinc oxide whiskers and potassium titanate whiskers; conductive metal oxide such as titanium oxide; or polyphenylene derivatives, may be used.

The binder may be generally included in an amount of 1 wt% to 20 wt%, preferably 1 wt% to 15 wt%, and more preferably 1 wt% to 10 wt% based on the total weight of the solid content in the positive electrode material mixture slurry.

The solvent may include an organic solvent, such as N-methyl-2-pyrrolidone (NMP), and may be used in an amount such that desirable viscosity is obtained when the positive electrode active material as well as selectively the binder and the conductive agent are included. For example, the solvent may be included in an amount such that a concentration of a solid content including the positive electrode active material as well as selectively the binder and the conductive agent is in a range of 50 wt% to 95 wt%, preferably 70 wt% to 95 wt%, and more preferably 70 wt% to 90 wt%.

The thickness of the positive electrode according to the present invention may generally range from 120 µm to 180 pm, preferably, 140 µm to 160 µm. When the thickness of the positive electrode is in the above range, there is an advantage that more positive electrodes may be stacked in the stack having the same thickness, thereby increasing the energy density.

### Negative electrode

The negative electrode included in the electrode assembly of the present invention, for example, may be prepared by coating a negative electrode collector with a negative electrode material mixture slurry including a negative electrode active material, a binder, a conductive agent, a solvent, and the like, or a graphite electrode formed of carbon (C) or a metal itself may be used as the negative electrode.

For example, in a case in which the negative electrode is prepared by coating the negative electrode collector with the negative electrode material mixture slurry, the negative electrode collector generally has a thickness of 3 um to 500 um. The negative electrode collector is not particularly limited so long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used. Also, like the positive electrode collector, the negative electrode collector may have fine surface roughness to improve bonding strength with the negative electrode active material, and the negative electrode collector may be used in various shapes such as a film, a sheet, a foil, a net, a porous body, a foam body, a non-woven fabric body, and the like.

Furthermore, the negative electrode active material may include at least one selected from the group consisting of lithium metal, a carbon material capable of reversibly intercalating/deintercalating lithium ions, metal or an alloy of lithium and the metal, a metal composite oxide, a material which may be doped and undoped with lithium, and a transition metal oxide.

As the carbon material capable of reversibly intercalating/deintercalating lithium ions, a carbon-based negative electrode active material generally used in a lithium ion secondary battery may be used without particular limitation, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon, mesophase pitch carbide, and fired cokes.

As the metal or the alloy of lithium and the metal, a metal selected from the group consisting of Cu, Ni, Na, K, Rb, Cs, Fr, Be, Mg, Ca, Sr, Si, Sb, Pb, In, Zn, Ba, Ra, Ge, Al, and Sn, or an alloy of lithium and the metal may be used.

One selected from the group consisting of PbO, PbO₂, Pb₂O₃, Pb₃O₄, Sb₂O₃, Sb₃O₄, Sb₂O₅, GeO, GeO₂, Bi₂O₃, Bi₂O₄, Bi₂O₃, LiₓFe₂O₃ (0≤x≤1), LiₓWO₂ (0≤x≤1), and SnₓMe₁₋ₓMe'_{y}O_{z} (Me: Mn, Fe, Pb, Ge; Me': Al, B, P, Si, Groups I, II and III elements of the periodic table, or halogen; 0<x≤1; 1≤y≤3; 1≤z≤8) may be used as the metal composite oxide.

The material, which may be doped and undoped with lithium, may include Si, SiOₓ (0<x≤2), a Si-Y alloy (where Y is an element selected from the group consisting of alkali metal, alkaline earth metal, a Group 13 element, a Group 14 element, transition metal, a rare earth element, and a combination thereof, and is not Si), Sn, SnO₂, and Sn-Y (where Y is an element selected from the group consisting of alkali metal, alkaline earth metal, a Group 13 element, a Group 14 element, transition metal, a rare earth element, and a combination thereof, and is not Sn), and a mixture of SiO₂ and at least one thereof may also be used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may include lithium-containing titanium composite oxide (LTO), vanadium oxide, and lithium vanadium oxide.

The negative electrode active material may be included in an amount of 60 wt% to 99 wt%, preferably 70 wt% to 99 wt%, and more preferably 80 wt% to 98 wt% based on the total weight of the solid content in the negative electrode material mixture slurry.

The binder is a component that assists in the binding between the conductive agent, the active material, and the current collector. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene, sulfonated ethylene-propylene-diene, a styrene-butadiene rubber, a fluoro rubber, and various copolymers thereof.

The binder may be generally included in an amount of 1 wt% to 20 wt%, preferably 1 wt% to 15 wt%, and more preferably 1 wt% to 10 wt% based on the total weight of the solid content in the negative electrode material mixture slurry.

The conductive agent is a component for further improving the conductivity of the negative electrode active material, wherein the conductive agent may be added in an amount of 1 wt% to 20 wt% based on the total weight of the solid content in the negative electrode slurry. The conductive agent is not particularly limited as long as it has conductivity without causing adverse chemical changes in the battery, and, for example, a conductive material, such as: carbon powder such as carbon black, acetylene black, Ketjen black, channel black, furnace black, lamp black, or thermal black; graphite powder such as natural graphite, artificial graphite, or graphite; conductive fibers such as carbon nanotubes, carbon fibers, or metal fibers; fluorocarbon powder; conductive powder such as aluminum powder or nickel powder; conductive whiskers such as zinc oxide whiskers and potassium titanate whiskers; conductive metal oxide such as titanium oxide; or polyphenylene derivatives, may be used.

The conductive agent may be included in an amount of 1 wt% to 20 wt%, preferably 1 wt% to 15 wt%, and more preferably 1 wt% to 10 wt% based on the total weight of the solid content in the negative electrode material mixture slurry.

The solvent may include water or an organic solvent, such as N-methyl-2-pyrrolidone (NMP), and may be used in an amount such that desirable viscosity is obtained when the negative electrode active material as well as optionally the binder and the conductive agent is included. For example, the solvent may be included in an amount such that a concentration of a solid content including the negative electrode active material as well as optionally the binder and the conductive agent is in a range of 50 wt% to 95 wt%, for example, 70 wt% to 90 wt%.

In a case in which the metal itself is used as the negative electrode, the negative electrode may be prepared by a method of physically bonding, rolling, or depositing a metal on a metal thin film itself or the negative electrode collector. The depositing method may use an electrical deposition method or chemical deposition method of metal.

For example, the metal bonded/rolled/deposited on the metal thin film itself or the negative electrode collector may include one metal selected from the group consisting of lithium (Li), nickel (Ni), tin (Sn), copper (Cu), and indium (In) or an alloy of two metals thereof.

The thickness of the negative electrode according to the present invention may generally range from 180 µm to 240 pm, preferably, 200 µm to 220 µm. When the thickness of the negative electrode is in the above range, there is an advantage that more positive electrodes may be stacked in the stack having the same thickness, thereby increasing the energy density.

### Method for Manufacturing Electrode Assembly

The electrode assembly according to the present invention exhibits the most remarkable effect, in particular, in the case of a stacked- or stack and lamination-type structure.

The electrode assembly of the present invention may be manufactured by a conventional method known in the art.

For example, the stacked-type electrode assembly may be manufactured by sequentially stacking a positive electrode and a negative electrode with a separator interposed therebetween, and the stack and lamination-type electrode assembly may be manufactured by sequentially stacking a positive electrode, a separator, a negative electrode, and a separator to manufacture a basic unit, repeatedly stacking the basic units, and then applying heat and pressure to laminate the basic units.

### Secondary Battery

Next, a secondary battery according to the present invention will be described. The secondary battery according to the present invention may include: the electrode assembly including the positive electrode, the negative electrode, and the separator; and an electrolyte.

Since the electrode assembly has been described above, a detailed description thereof will be omitted, and, only the other components will be described.

The electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used.

The lithium salt may be used without particular limitation as long as it is a compound capable of providing lithium ions used in the secondary battery. Specifically, anions of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, and as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. It is preferable to use the lithium salt in a concentration range of 0.1 M to 2.0 M. When the concentration of the lithium salt is in the above range, the electrolyte may have suitable conductivity and viscosity, thereby exhibiting excellent performance, and lithium ions may effectively move.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% based on a total weight of the electrolyte.

Meanwhile, the secondary battery as above may be manufactured by a method in which the electrode assembly is accommodated in the battery case, the electrolyte is then injected thereto, the secondary battery is assembled, and an activation process is performed.

The activation process may include a process of heating the secondary battery while applying pressure to the secondary battery, that is, a pressurized pre-heating process before the process of charging, aging, and discharging the assembled battery. The pressurized pre-heating process may be performed together with initial charging.

The binder included in the active material layer or the binder included in the coating layer formed on the surface of the separator is softened and has flexibility through the heating process in the secondary battery. For example, when the coating layer including the binder is in contact with the positive electrode or the negative electrode through the process of applying pressure to the secondary battery, the coating layer including the binder formed on the surface of the separator may be appropriately deformed in the surface shape thereof according to the surface shape of the positive electrode or the negative electrode. When the surface shape of the coating layer is modified according to the surface shape of the positive electrode or the negative electrode, the space between the coating layer and the interface between the positive electrode and/or the negative electrode may be effectively removed and the coating layer and the positive electrode and/or the negative electrode may be in contact with each other. In addition, when the coating layer is in close contact with the positive electrode and/or the negative electrode, adhesion to the positive electrode and/or the negative electrode may be exhibited.

The heating temperature of the secondary battery may be in a range of 45 °C to 80 °C, specifically, 55 °C to 75 °C, and more specifically, 65 °C to 72 °C. In this case, when the temperature is set in the above range, there is an effect that the adhesion to the positive electrode and/or the negative electrode is large.

A gap between the separator and the electrode may be reduced through a process of applying pressure to the secondary battery, that is, a gas which is generated through a reaction of the electrode with the electrolyte during the activation process, and exists between the separator and the electrode may be expelled out of the interface and removed.

In this case, the pressure applied to the secondary battery may be a pressure which is applied to the secondary battery by using a separate pressurizing means outside the secondary battery. That is, according to an example of a method for manufacturing a secondary battery according to the present invention, by applying pressure to the secondary battery by using a separate pressurizing means outside the secondary battery during the activation process for the secondary battery, the gas generated during the activation process can be more efficiently removed from the battery cell of the secondary battery, and the separator and the electrode can be in close contact with each other.

The pressure applied to the secondary battery during the activation process may be 0.2 kgf/cm² to 20 kgf/cm², specifically 0.2 kgf/cm² to 10 kgf/cm², and more specifically 0.2 kgf/cm² to 5 kgf/cm². In this case, when the pressure is greater than 20 kgf/cm², the battery may be damaged by excessive pressure.

The secondary battery including the electrode assembly according to the present invention has little bending of the electrode assembly after the activation process. Specifically, when the degree of bending of the fully charged electrode assembly is measured after the activation process is performed on the secondary battery according to the present invention, and the thickness of the entire electrode assembly is D, the difference in height between the center and the both ends of the electrode assembly in the entire length direction may be 0.03D or less, preferably, 0.001D to 0.02D.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Example

### Example 1

A positive electrode having a thickness of 158 pm, a negative electrode having a thickness of 211 pm, and separators A and separators B in which a coating layer was formed on a substrate were prepared.

The separator A was formed by adding, to an N-methyl pyrrolidone (NMP) solvent, polyvinylidene fluoride-tetrafluoroethylene (PVdF-TFE, TFE substitution rate of 20%, weight average molecular weight of 300,000 g/mol), polyvinylidene fluoride-chlorotrifluoroethylene (PVDF-CTFE, CTFE substitution rate of 20%), and alumina (Al₂O₃) having an average particle diameter (D₅₀) of 500 nm in a weight ratio of 15:5:80, forming a slurry, and coating the slurry on a polyolefin substrate in a dipping phase separation manner.

The separator B was formed by adding, to an acetone solvent, polyvinylidene fluoride-hexafluoropropylene (PVdF-HFP, HFP substitution rate of 20%, weight average molecular weight of 350,000 g/mol), polyvinylidene fluoride-chlorotrifluoroethylene (PVDF-CTFE, CTFE substitution rate of 20%), and alumina (Al₂O₃) having an average particle diameter (D₅₀) of 500 nm in a weight ratio of 15:5:80, forming a slurry, and coating the slurry on a polyolefin substrate in a humidified phase separation manner.

A result of measuring a temperature at which adhesion of the separator A to the electrodes was maximized was 70 °C, and a result of measuring a temperature at which adhesion of the separator B to the electrodes was maximized was 65 °C. In addition, the thickness of the separator A was 15 µm, and the thickness of the separator B was 15 µm.

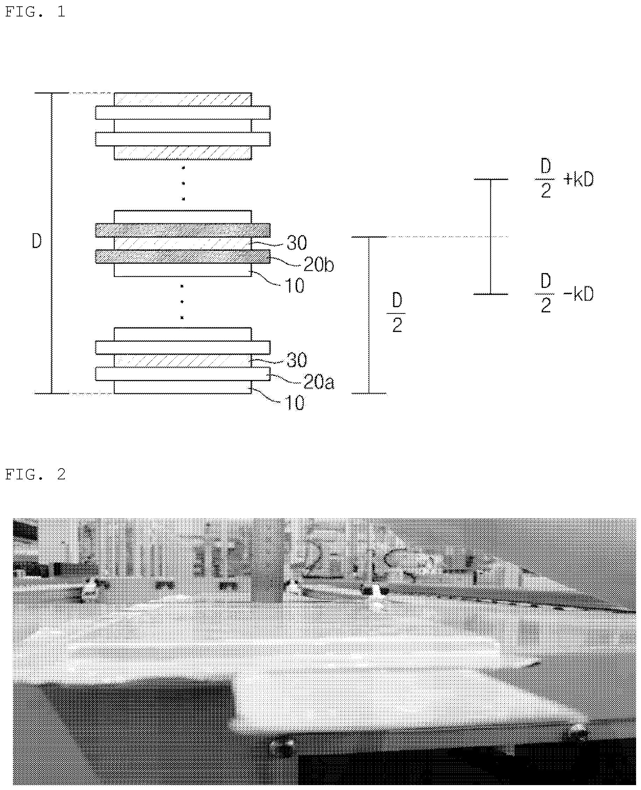

Next, the positive electrode, the separator, the negative electrode, and the separator were alternately stacked to manufacture an electrode assembly as illustrated in FIG. 1.

Twelve separators A 20a were stacked to be positioned between the positive electrode 10 and the negative electrode 30, 12 separators B 20b were stacked thereon to be positioned between the positive electrode 10 and the negative electrode 30, and 12 separators A 20a were stacked thereon to be positioned between the positive electrode 10 and the negative electrode 30. That is, separators B were positioned in the central portion of the electrode assembly, and separators A were positioned in the surface portion of the electrode assembly.

The assembly of the secondary battery was completed by accommodating the manufactured electrode assembly in a pouch exterior and injecting an electrolyte thereto.

### Example 2

A positive electrode having a thickness of 158 pm, a negative electrode having a thickness of 211 pm, and separators A and separators C in which a coating layer was formed on a substrate were prepared.

The separator A was formed by adding, to an N-methyl pyrrolidone (NMP) solvent, polyvinylidene fluoride-tetrafluoroethylene (PVdF-TFE, TFE substitution rate of 20%, weight average molecular weight of 300,000 g/mol), polyvinylidene fluoride-chlorotrifluoroethylene (PVDF-CTFE, CTFE substitution rate of 20%), and alumina (Al₂O₃) having an average particle diameter (D₅₀) of 500 nm in a weight ratio of 15:5:80, forming a slurry, and coating the slurry on a polyolefin substrate in a dipping phase separation manner.

The separator C was formed by adding, to an acetone solvent, polyvinylidene fluoride-hexafluoropropylene (PVdF-HFP, HFP substitution rate of 15%, weight average molecular weight of 300,000 g/mol), polyvinylidene fluoride-chlorotrifluoroethylene (PVDF-CTFE, CTFE substitution rate of 20%), and alumina (Al₂O₃) having an average particle diameter (D₅₀) of 500 nm in a weight ratio of 15:5:80, forming a slurry, and coating the slurry on a polyolefin substrate in a humidified phase separation manner.

A result of measuring a temperature at which adhesion of the separator A to the electrodes was maximized was 70 °C, and a result of measuring a temperature at which adhesion of the separator C to the electrodes was maximized was 60 °C. In addition, the thickness of the separator A was 15 µm, and the thickness of the separator C was 15 µm.

Twelve separators A were stacked to be positioned between the positive electrode and the negative electrode, 12 separators C were stacked thereon to be positioned between the positive electrode and the negative electrode, and 12 separators A were stacked thereon to be positioned between the positive electrode and the negative electrode. That is, the separators C were positioned in the central portion and the separators A were disposed in the surface portion. A secondary battery was manufactured in the same manner as in Example 1, except that the type of the separator was changed.

### Example 3

A secondary battery was manufactured in the same manner as in Example 1, except that six separators A, 12 separators B, and six separators A were sequentially used when the electrode assembly was manufactured by alternately stacking the positive electrode, the separator, the negative electrode, and the separator.

### Example 4

A secondary battery was manufactured in the same manner as in Example 1, except that 12 separators A, 6 separators B, and 12 separators A were sequentially used when the electrode assembly was manufactured by alternately stacking the positive electrode, the separator, the negative electrode, and the separator.

### Comparative Example 1

A secondary battery was manufactured in the same manner as in Example 1, except that 36 separators A were used when the electrode assembly was manufactured by alternately stacking the positive electrode, the separator, the negative electrode, and the separator.

### Experimental Example - Bending Evaluation of Electrode Assembly

For each of the lithium secondary batteries manufactured in Examples 1 to 4 and Comparative Example 1, a pressurized pre-heating process was performed in jig formation equipment. Specifically, the pressurized pre-heating process was performed by applying pressure for 2 minutes at 70 °C under a pressure 0.2 kgf/cm² and for 3 minutes at 70 °C under a pressure of 3 kgf/cm². Thereafter, the first activation process was performed in the jig. Specifically, the first activation process was performed by charging the secondary battery up to 60% of the state of charge (SOC) at a constant current of 1 C and heating the battery at 55 °C under a pressure of 5 kgf/cm². Thereafter, the second activation process was performed. Specifically, the secondary activation process was performed by fully charging the secondary battery up to 4.25 V at a constant current of 0.33 C in a 25°C chamber environment without jig formation equipment. Then, the presence of bending of the electrode assembly was observed with naked eyes, and evaluation was performed as follows.
O: No bending
X: Bending

**[Table 1]**

| | Bending evaluation |
|---|---|
| Example 1 | |
| Example 2 | |
| Example 3 | |
| Example 4 | |
| Comparative Example 1 | X |

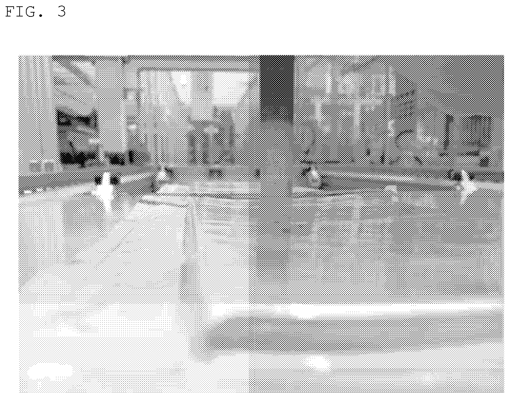

FIG. 2 is a photograph of a state after completion of the activation process of the lithium secondary battery in Example 1, and FIG. 3 is a photograph of a state after completion of the activation process of the lithium secondary battery in Comparative Example 1. As shown in FIG. 2, in the case of Example 1 in which the arrangement of the separators at the central portion and the outer portion is adjusted, bending is not observed. On the other hand, as shown in FIG. 3, in the case of Comparative Example 1, bending of the electrode assembly is observed. For the bending of the electrode assembly in Comparative Example 1, a difference in height between the central portion and both ends in the entire length direction was measured to be 0.031D with respect to the thickness D of the electrode assembly.

### [Description of the sign]

10 : positive electrode
20a : separator A
20b : separator B
30 : negative electrode
D : thickness of the electrode assembly

## Claims

1. An electrode assembly in which positive electrodes and negative electrodes are alternately stacked with separators interposed therebetween and which comprises two or more types of separators having different temperatures at which adhesion is maximized,
wherein the temperature at which the adhesion of the separators, positioned in the central portion of the electrode assembly, to the electrodes is maximized is lower than the temperature at which the adhesion of the separators, positioned in the other regions, to the electrodes is maximized.

2. The electrode assembly of claim 1, wherein when the thickness of the entire electrode assembly is D, the central portion is a region in which the distance from the outermost surface is D/2 - kD to D/2 + kD (where, 0.1≤k≤0.3).

3. The electrode assembly of claim 1, wherein the number of the separators included in the electrode assembly is 20 to 50.

4. The electrode assembly of claim 1, wherein the temperature at which the adhesion of the separators positioned in the central portion is maximized is less than 70 °C.

5. The electrode assembly of claim 1, wherein the temperature at which the adhesion of the separators positioned in the other regions is maximized is 70 °C to 80 °C.

6. The electrode assembly of claim 1, wherein a difference between the temperature at which the adhesion of the separators, positioned in the central portion, to the electrodes is maximized and the temperature at which the adhesion of the separators, positioned in the other regions, to the electrodes is maximized is 0 °C to 15 °C (exclusive of 0).

7. The electrode assembly of claim 2, wherein the ratio of the number of the separators positioned in a region in which the distance from the outermost surface of the electrode assembly is D/2 - kD to D/2 + kD to the number of the separators included in the entire electrode assembly is 1:1 to 1:4.

8. The electrode assembly of claim 1, wherein the separators included in the electrode assembly comprises a porous separator substrate, and a porous coating layer entirely coated on one surface or both surfaces of the separator substrate, and the coating layer comprises a mixture of inorganic particles selected from a metal oxide, a metalloid oxide, a metal fluoride, a metal hydroxide, and a combination thereof, and a binder polymer for connecting and fixing the inorganic particles to each other.

9. The electrode assembly of claim 8, wherein the coating layer comprises, as the inorganic particles, at least one selected from among Al₂O₃ and AlOOH.

10. The electrode assembly of claim 8, wherein the coating layer comprises, as the binder polymer, at least one selected from among polyethylene, polyvinylidene fluoride, polyvinylidene fluoride-tetrafluoroethylene, polyvinylidene fluoride-chlorotrifluoroethylene, and polyvinylidene fluoride-hexafluoropropylene.

11. A secondary battery comprising the electrode assembly of any one of claims 1 to 10.

12. The secondary battery of claim 11, wherein in the electrode assembly, a difference in height between the center and both ends in the entire length direction is 0.03D or less.
